Europäisches Patentamt

(19) European Patent Office

Office européen des brevets

(11) Publication number: **0 196 159**
**B1**

(12) **EUROPEAN PATENT SPECIFICATION**

(45) Date of publication of patent specification: **25.07.90**

(51) Int. Cl.⁵: **G 01 N 1/22, G 01 N 15/00**

(21) Application number: **86301067.4**

(22) Date of filing: **17.02.86**

(54) Air stream sampling device.

(30) Priority: **26.03.85 US 716361**

(43) Date of publication of application:
**01.10.86 Bulletin 86/40**

(45) Publication of the grant of the patent:
**25.07.90 Bulletin 90/30**

(84) Designated Contracting States:
**AT BE CH DE FR GB IT LI LU NL SE**

(56) References cited:
**FR-A-2 391 464**
**US-A-3 633 405**
**US-A-3 765 247**
**US-A-3 832 904**
**US-A-4 150 574**

(73) Proprietor: **W.L. GORE & ASSOCIATES, INC.**
**555 Paper Mill Road P.O. Box 9329**
**Newark Delaware 19711 (US)**

(72) Inventor: **Bailey, Christian Edward**
**700 Principio Road Port Deposit**
**Maryland 21904 (US)**
Inventor: **Bowser, John Joseph**
**3 Penndrew Court**
**Wilmington Delaware 19808 (US)**

(74) Representative: **Taylor, Derek George et al**
**MATHISEN, MACARA & CO. The Coach House**
**6-8 Swakeleys Road**
**Ickenham Uxbridge UB10 8BZ (GB)**

EP 0 196 159 B1

Courier Press, Leamington Spa, England.

## Description

This invention relates to a device for sampling a laminar flow air stream for the presence of particles, in particular aerosol particles. More particularly the invention relates to a device for drawing a small representative sample of air from a large-volume stream of laminar flow air in a clean room.

In clean rooms, for example of the type useful for manufacture or handling of sterile pharmaceutical or pure chemical materials or for manufacture of sensitive optical or electronic parts or devices, it is required that the air be sampled periodically and routinely to establish the level of cleanliness in the room or at specified work stations or locations therein or when a particulate leak is suspected. A common practice is to draw this air sample from a length of tubing, the entrance of which is located generally in the area of interest. However, it is recognized that particles in laminar flow air streams in clean rooms move only along paths originating at the source of the particles and follow air flow stream lines through the clean room. Thus, a sampling tube collects a particle only if the entrance to the tube is placed directly in the path of the particle.

It is known from FR—A—2,391,464 to provide apparatus for measuring the level of particles in a gas flow which comprises a single tube having orifices spaced apart along its length, the tube being connected at one end to a vacuum source and a measuring device.

It is also known from US—A—3,765,247 to provide an air sampling device operated solely by compressed air, the device including a manifold having a plurality of fittings each adapted to receive individual sample-collecting chambers whereby several samples may be taken consecutively.

It is further known from US—A—4,150,574 to provide a fluid sampling system in which a sample of a fluid flowing in a path is conducted to a detector not only by the force of fluid being directed into the detector but also by creating a fluid pressure in the detector which is negative with respect to the detector inlet. In particular a sampling, or impact, tube has a plurality of openings spaced apart along its length with sample-collecting cones disposed in front of the openings.

According to the invention there is provided a device for sampling a small representative fraction of a laminar flow air stream to be monitored for the presence of particles in a clean room environment, said device comprising:

(a) an array of a plurality of sampling tubes (2 or 2a) evenly spaced apart, for positioning across the air stream flow path, said sampling tubes all being connected to a single common outlet tube (3), said array having a size and configuration selected to minimize any diversion of said air stream from its original path, said sampling tubes having a multiplicity of regularly spaced orifices (4) therein, said orifices being of substantially smaller size than the interior bores of said sampling tubes, and each orifice being capable of drawing equally from said air stream;

(b) means (5, 6) for drawing a sample of air from said air stream through said orifices; and

(c) means (7) to analyze the particles in said sample from said air stream.

The invention will now be described, by way of example, with reference to the accompanying drawings in which:—

Figure 1 is a perspective of a preferred rectangular form of a planar array or gridwork sampling device;

Figure 2 is an alternative double ring form of the sampling device; and

Figure 3 illustrates a method for using the sampling device to analyze the particles contained in a body of moving air of specified dimensions which will pass by the device in a specified length of time.

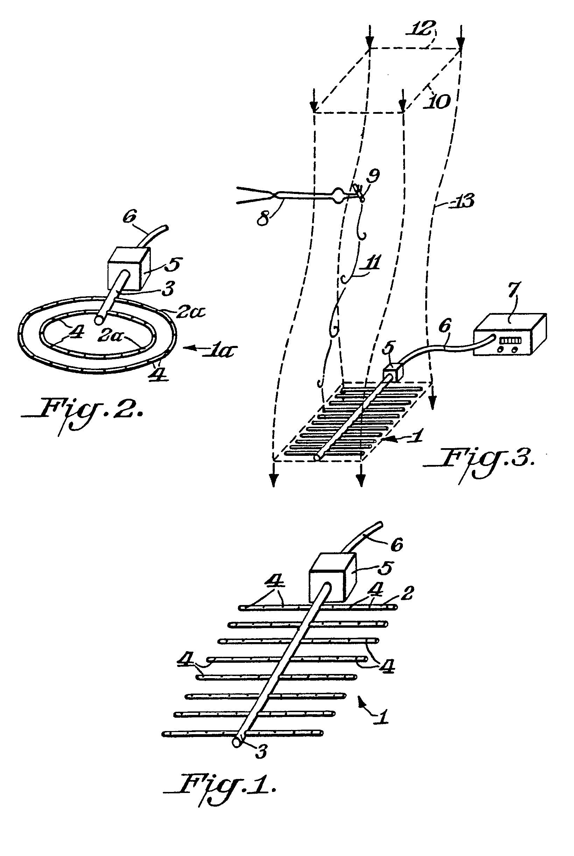

An air stream can be sampled, in accordance with the invention, by placing into a cross section of the laminar flow air stream a planar array 1, as shown in Figures 1 and 3, of parallel-spaced hollow tubes 2 interconnected by larger transverse hollow tubes 3, each of the smaller tubes 2 having a number of small orifices 4 along its length such that, as a group, all of the orifices 4 in all the tubes 2 constitute a matrix of entrances to the interior of the tubes 2 of the array 1. From the single outlet tube 3 for the array is drawn the representative sample. The matrix of orifices 4 is regular and evenly spaced, the orifices 4 all being of the same size. The cross-sectional area of any tube 2 must be greater than the sum of the cross-sectional areas of all orifices which feed it. Thus, nearly all of the pressure drop associated with drawing a sample through the device is due to the orifices and the flow of air is substantially equal through all the orifices. Therefore, the sample is equally representative of all locations across the span of the array and of the cross section of the laminar flow body of air being analyzed. In an alternative embodiment, the orifices in the tubes 2 are of progressively increasing size the farther they are disposed from the single outlet tube 3 of the array 1. In both embodiments, sample tubes should not be so long that unacceptable particle loss occurs during the transport of the sample.

The tubes 2 and 3 of which the planar array 1 is constructed are of small diameter in relation to the spaces between them and the array is generally of light and open form such that a body of air in laminar flow, such as that present in a clean room, is not substantially diverted around the area occupied by the array, but passes through and by it largely undisturbed and remains in laminar flow as before such that a cross section, rather than the streamline leading to the parting of the airflow, is represented. The importance of the form not disturbing the airflow is primarily that the sample is not made unrepresentative, rather than that the flow downstream maintains the same laminar character. The area of the array chosen is the same as that of a cross section of the area of interest to be sampled and is placed downstream of any suspected or indicated known source of particles and mounted in a place by means of accessory holding and fastening devices and equipment which will not interfere with the laminar flow air stream around the device. The single representative sample is drawn from the common outlet of the array and analyzed for particles by any of the common ways or devices, such as by a particle counter, an optical particle analyzer, condensation nucleus counter, mobility analyzer, aerodynamic sizer, diffusion battery, electrical size analyzer, electrostatic sampler, piezoelectric microbalance, aerosol electrometer or impactor.

Fig. 2 shows an alternative embodiment of a planar array 1a of interconnected hollow circular tubes 2a having a number of orifices 4, similar to the orifices 4 in gridwork array 1, such that, as a group, all the orifices 4 in the tubes 2a constitute a matrix of entrances to the interior of the tubes 2a of the circular array 1a. Common outlet tube 3, fitting 5, and tube 6 are shown for completeness.

Fig. 3 depicts a perspective view of an aerosol sampling device as used in an experiment in which a burning cigarette 9 is held by a pair of tongs 8 upstream of the device 1 in the moving body of air whose boundaries are shown by dotted lines such as 10, 12 and 13. The tobacco smoke aerosol particles are released in the laminar flowing body of air illustrated as circumscribed by the dotted lines and carried through the area occupied by the device 1. A sample is taken, by the device 1, which passes through the connecting fitting 5 and tube 6 to the analyzer 7 in which the particles are counted.

The preferred material comprising the tubes of the array is stainless steel welded into the array. A preferred means to provide the orifices is by having them drilled by means of a laser beam. Other methods for providing the orifices may be used so long as they can provide smooth, uniform, usually circular, holes in the tubes.

Other materials may be utilized as tubes to form the array of the sampling device so long as the array is of minimum bulk or tubing diameter to retain the laminar flow characteristic of the air stream being sampled by the device. Metals other than stainless steel, or stiff tubes of other materials compatible with the aerosol, may be alternatively utilized. Other tube arrays than those illustrated may be used so long as they approximate in shape to the cross section of air stream of interest, and do not substantially interfere with the laminar flow of air.

## Claims

1. A device for sampling a small representative fraction of a laminar flow air stream to be monitored for the presence of particles in a clean room environment, said device comprising:

(a) an array of a plurality of sampling tubes (2 or 2a) evenly spaced apart for positioning across the air stream flow path, said sampling tubes all being connected to a single common outlet tube (3), said array having a size and configuration selected to minimize any diversion of said air stream from its original path, said sampling tubes having a multiplicity of regularly spaced orifices (4) therein, said orifices being of substantially smaller size than the interior bores of said sampling tubes, and each orifice being capable of drawing equally from said air stream;

(b) means (5, 6) for drawing a sample of air from said air stream through said orifices; and

(c) means (7) to analyze the particles in said sample from said air stream.

2. A device according to claim 1, characterized in that said array is planar.

3. A device according to claim 1 or claim 2, characterized in that the orifices (4) in said tubes are of equal size.

4. A device according to claim 1, characterized in that the orifices (4) in said tubes are of progressively increasing size the farther they are disposed from the single outlet tube (3) of said array.

5. A device according to any preceding claim, characterized in that the means to analyze the particles in the sample is a counter.

6. A device according to any one of claims 1 to 4, characterized in that the means to analyze the particles in the sample is an optical particle analyzer.

7. A device according to claim 1, characterized in that said array of evenly-spaced interconnected tubes has one exit for the sampled air and the said array approximates in size to the cross section of the air stream being sampled.

## Patentansprüche

1. Probenahmevorrichtung für einem kleinen repräsentativen Anteil aus einem laminaren Luftstrom, der auf die Anwesenheit von Partikeln in einer reinen Raumumgebung zu überwachen ist, wobei die Vorrichtung:

(a) ein Feld mit einer Mehrzahl von gleichmäßig voneinander beabstandeten Probenahmerohren (2 oder 2a) zur Positionierung quer zum Luftstrom-Strömungspfad, wobei die Probenahmerohre alle an ein einziges gemeinsames Auslaßrohr (3) angeschlossen sind, das Feld eine Größe und Konfiguration hat, die ausgewählt sind, um eine etwaige Ablenkung des Luftstroms von seinem ursprünglichen Pfad zu minimieren, die Probenahmerohre eine Vielzahl von mit regelmäßigen Abständen angeordneten Öffnungen (4) darin aufweisen, welche Öffnungen wesentlich kleiner sind als die Innenbohrungen der Probenahmerohre, und jede Öffnung zum gleichen Abziehen aus dem Luftstrom geeignet ist;

(b) eine Einrichtung (5, 6) zum Abziehen einer Luftprobe aus dem Luftstrom durch die Öffnungen; und

(c) eine Einrichtung (7) zum Analysieren der Partikel in der Probe aus dem Luftstrom aufweist.

2. Vorrichtung nach Anspruch 1, dadurch gekennzeichnet, daß das Feld eben ist.

3. Vorrichtung nach Anspruch 1 oder 2, dadurch gekennzeichnet, daß die Öffnungen (4) in den Rohren gleich groß sind.

4. Vorrichtung nach Anspruch 1, dadurch gekennzeichnet, daß die Öffnungen (4) in den Rohren eine progressiv steigende Größe haben, je weiter sie vom einzigen Auslaßrohr (3) des Feldes weg angeordnet sind.

5. Vorrichtung nach einem der vorhergehenden Ansprüche, dadurch gekennzeichnet, daß die Einrichtung zum Analysieren der Partikel in der Probe ein Zähler ist.

6. Vorrichtung nach einem der Ansprüche 1 bis 4, dadurch gekennzeichnet, daß die Einrichtung zum Analysieren der Partikel in der Probe ein optischer Partikelanalysator ist.

7. Vorrichtung nach Anspruch 1, dadurch gekennzeichnet, daß das Feld von gleichmäßig beabstandeten, untereinander verbundenen Rohren einen Ausgang für die Probenluft hat und das Feld in der Größe den Querschnitt des Luftstroms annähert, von dem die Probe genommen wird.

**Revendications**

1. Dispositif d'échantillonnage d'une petite fraction représentative d'un courant d'air en circulation laminaire à contrôler pour la présence de particules dans un environnement de pièce propre, ce dispositif comprenant:

(a) une rangée de plusieurs tubes d'échantillonnage (2 ou 2a) régulièrement espacés, destinés à être positionnés à travers le parcours de circulation de courant d'air, ces tubes d'échantillonnage étant tous reliés à un seul tube de sortie (3) commun, cette rangée ayant une taille et une configuration choisies pour rendre minimale toute déviation du courant d'air de son parcours initial, les tubes d'échantillonnage comportant une multiplicité d'orifices (4) régulièrement espacés, ces orifices étant d'une taille sensiblement plus petite que les trous intérieurs de ces tubes d'échantillonnage, et chaque orifice pouvant prélever de façon égale à partir de ce courant d'air;

(b) un moyen (5, 6) pour prélever un échantillon d'air du courant d'air précité par ces orifices; et

(c) un moyen (7) pour analyser les particules dans l'échantillon provenant de ce courant d'air.

2. Dispositif suivant la revendication 1, caractérisé en ce que la rangée est plane.

3. Dispositif suivant l'une ou l'autre des revendications 1 et 2, caractérisé en ce que les orifices (4) des tubes sont de taille égale.

4. Dispositif suivant la revendication 1, caractérisé en ce que les orifices (4) des tubes sont d'une taille augmentant progressivement au fur et à mesure qu'ils s'éloignent du tube de sortie (3) unique de la rangée.

5. Dispositif suivant l'une quelconque des revendications précédentes, caractérisé en ce que le moyen utilisé pour analyser les particules de l'échantillon est un compteur.

6. Dispositif suivant l'une quelconque des revendications 1 à 4, caractérisé en ce que le moyen utilisé pour analyser les particules de l'échantillon est un analyseur de particules optique.

7. Dispositif suivant la revendication 1, caractérisé en ce que la rangée de tubes interconnectés, régulièrement espacés présente une sortie pour l'air échantillonné et la taille de cette rangée est proche de la section transversale du courant d'air en cours d'échantillonnage.

*Fig.2.*

*Fig.3.*

*Fig.1.*

1